# EUROPEAN PATENT APPLICATION

(11) **EP 2 019 542 A1**
(43) Date of publication of application: **28.01.2009**
(21) Application number: 08103178.3
(22) Date of filing: 31.03.2008
(51) Int. Cl.: H04M 3/56

(54) **Display apparatus and method for controlling data sharing in a video conference**

(30) Priority: 26.07.2007 KR 20070075012
(71) Applicant: Samsung Electronics Co., Ltd., Suwon-si, Gyeonggi-Do (KR)
(72) Inventor: Hwang, Soon-hoon, Samsung 6-cha Apt., Yongin-si, Gyeonggi-do (KR); Kang, Yeon-sun, Yongin-si Gyeonggi-do (KR); Seo, Kyung-hee, Suwon-si Gyeonggi-do (KR)
(74) Representative: D'Halleweyn, Nele Veerle Trees Gertrudis

(57) **Abstract**

A display apparatus, a control method thereof and a display system having the same are provided. The display apparatus includes: a communication unit; a memory in which the same data as that of an external display apparatus is loaded in the same reference address as that of the external display apparatus; and a controller which controls to change data loaded in a reference address corresponding to address information from the external display apparatus based on data change information from the external display apparatus and to display the changed data if the address information and the data change information are received from the external display apparatus via the communication unit. The display apparatus can control, without a server, data which is shared among a plurality of users in a video conference. A first master display apparatus has control authority, over at least one second slave display apparatus, during a data sharing session, of the shared data, via a synchronisation program.

## Description

### BACKGROUND OF THE INVENTION

### 1. Field of Invention

Apparatuses and methods consistent with the present invention relate to a display apparatus, a control method thereof, and a display system having the same, and more particularly, to a display apparatus which is capable of controlling data which is shared in a video conference, a control method thereof, and a display system having the same.

### 2. Description of Related Art

In general, a display apparatus, e.g., a monitor or a television (TV), displays data such as pictures, texts, images, etc. which are processed in an external device connected thereto or stored therein. Further, the display apparatus also displays data transmitted from another device connected thereto via a communications network, e.g., the Internet, or the like.

Currently, a video phoning or video conferencing system, where people communicate with each other via a display apparatus, is improving rapidly. The video conferencing system allows users at distant locations to communicate with and view each other via a communication circuit by audio and video transmissions.

The video conferencing system enables the users at distant sites (e.g., different countries) to have a meeting or conference without people viewing each other. Here, data for the meeting or conference, such as data for presentation, may be shared during the video conferencing, by the following method.

First, data is transmitted to a server, and users contact the server and open the data using a data open program. Next, data is sent through e-mail, and users open the received data using a data open program. Lastly, users open data transferred through file transfer protocol (FTP) using a data open program.

However, in the related art methods for sharing data, as the users receive data and open the data using the data open program, the data may not be synchronized. In other words, since individually controlling the shared data, the users should synchronize the data in person through conversation or the like.

Here, the data can be synchronized through the server, but it is expensive to install and repair the server.

### SUMMARY OF THE INVENTION

The present invention provides a display apparatus which data can be shared among a plurality of users without a server and controlled by a user who has control authority, a control method thereof, and a display system having the same.

The present invention also provides a display apparatus where a process to synchronize data is not necessary, a control method thereof, and a display system having the same.

According to an aspect of the present invention, there is provided a display apparatus including: a communication unit; a memory where the same data as that of an external display apparatus is loaded in the same reference address as that of the external display apparatus; and a controller which controls to change data loaded in a reference address corresponding to address information from the external display apparatus on the basis of data change information from the external display apparatus and to display the changed data if the address information and the data change information are received from the external display apparatus via the communication unit.

If the data and the reference address are received from the external display apparatus, the controller may load the data to the memory on the basis of the received reference address.

If the data is received from the external display apparatus, the controller may load the received data to a preset reference address in the memory.

The communication unit may communicate with the external display apparatus using Session Initiation Protocol (SIP).

According to another aspect of the present invention, there is provided a control method of a display apparatus including: communicating with an external display apparatus; loading the same data as that of the external display apparatus to the same reference address as that of the external display apparatus; and if address information and data change information are received from the external display apparatus, controlling to change data loaded in a reference address corresponding to the received address information on the basis of the data change information and to display the changed data.

The loading the same data as that of the external display apparatus to the same reference address as that of the external display apparatus may include loading the data on the basis of the received reference address, if the data and the reference address are received from the external display apparatus.

The loading the same data as that of the external display apparatus to the same reference address as that of the external display apparatus may include loading the received data to a preset reference address, if the data is received from the external display apparatus.

The communicating with the external display apparatus may be performed using SIP.

According to another aspect of the present invention, there is provided a display system including: a first display apparatus which includes a first communication unit, a first memory where data is loaded, and a first controller controlling the first communication unit to transmit address information on a reference address of the first memory and data change information on a change of the data to an external display apparatus if the data is changed; and a second display apparatus which is provided as the external display apparatus and includes a second communication unit, a second memory where the same data as that of the first display apparatus is loaded in the same reference address as that of the first display apparatus, and a second controller controlling to change data loaded to a reference address corresponding to the address information on the basis of the data change information and to display the changed data if the address information and the data change information are received from the first display apparatus via the second communication unit.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of a display system which includes a first display apparatus and a second display apparatus according to an exemplary embodiment of the present invention;
FIG. 2A illustrates data which is opened by a data open program according to the exemplary embodiment of the present invention;
FIG. 2B illustrates data which is opened by a synchronization program according to the exemplary embodiment of the present invention;
FIG. 3 is a flow chart illustrating a process of controlling the first display apparatus according to the exemplary embodiment of the present invention; and
FIG. 4 is a flow chart illustrating a process of controlling the second display apparatus according to the exemplary embodiment of the present invention.

### DETAILED DESCRIPTION OF EXEMPLARY EMBODIMENTS OF THE INVENTION

Reference will now be made in detail to the embodiments of the present invention, examples of which are illustrated in the accompanying drawings, wherein like reference numerals refer to like elements throughout. The embodiments are described below so as to explain the present invention by referring to the figures.

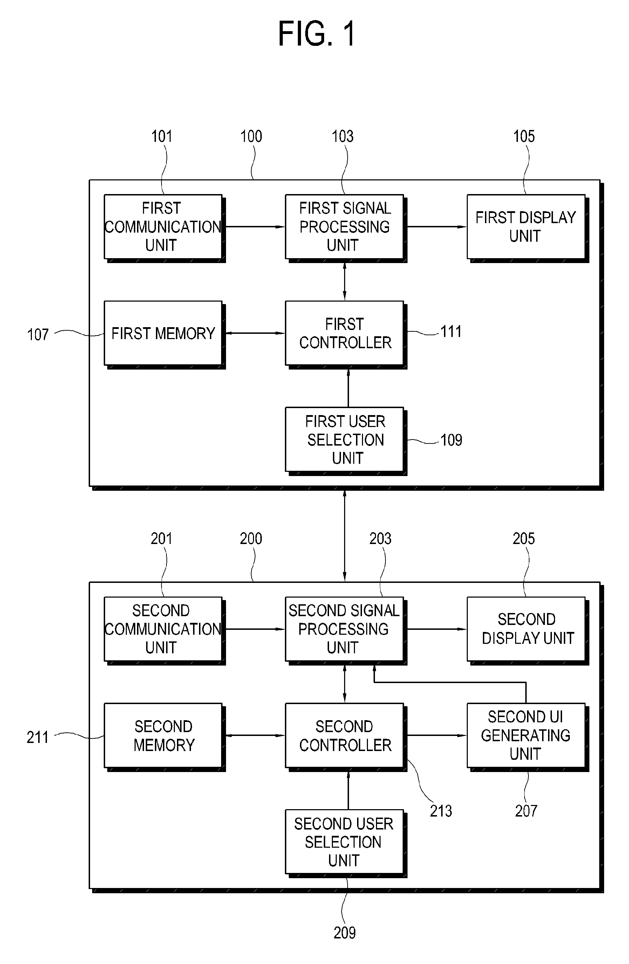

Referring to FIG. 1, a display system according to an exemplary embodiment of the present invention includes a first display apparatus 100 and a second display apparatus 200.

The first display apparatus 100 according to the present exemplary embodiment includes a first communication unit 101, a first signal processing unit 103, a first display unit 105, a first memory 107, a first user selection unit 109, and a first controller 111.

The first communication unit 101 communicates with the second display apparatus 200. In the present exemplary embodiment, the communication unit 101 communicates with the second display apparatus 200 using a Session Initiation Protocol (SIP) which is capable of providing multimedia services.

The first display apparatus 100 exchanges audio information, image information, and the like with the second display apparatus 200 via the first communication unit 101, and accordingly, audio/video/data communication, such as a video conference, is possible. Here, the first communication unit 101 may communicate with the second display apparatus 200 through commands transmitted as packets.

The first signal processing unit 103 processes data input via the first communication unit 101 by control of the first controller 111 and provides them to the first display 105 for display. Further, the first signal processing unit 103 provides the content of the data executed by the first controller 11 to the first display unit 105 for display.

The first signal processing unit 103 may have a variety of functions corresponding to the formats of input video signals. For example, the first signal processing unit 103 has an analog-to-digital (A/D) converting function to convert a variety of formats of video signals into a certain format of digital video signal, a digital decoding function, a scaling function to scale a vertical frequency, resolution, a screen ratio, etc. of input digital video signals or/and analog video signals to be suitable for an output standard of the first display unit 105, and a certain format conversion function.

The first display unit 105 displays a broadcast signal which is processed in the first signal processing unit 103. The first display unit 105 may be provided as a digital light processing (DLP), a liquid crystal display (LCD), a plasma display panel (PDP), and other types of display devices, or may be provided separately outside the first display apparatus 100.

The first user selection unit 109 is provided to change data displayed on the first display unit 105 and may include a remote controller, and/or menu keys provided on a casing, a mouse, a keyboard, etc. A user operates the first user selection unit 109 to change the displayed data in page, content, etc.

The first memory 107 is a region where data is loaded by the first controller 111 and may be provided as a random access memory (RAM) or the like. Here, the data may be loaded in a region of the first memory 107 and returns a reference address that is an address of the region where the data is loaded.

The first controller 111 loads data which the first display apparatus 100 shares with the second display apparatus 200 to the first memory 107. The controller 111 controls the first communication unit 101 to transmit address information on the reference address where the data is loaded and data change information on changes of data if being directed to modify data through the first user selection unit 109. The first controller 111 may be provided as a central processing unit (CPU), a microcomputer, etc.

In detail, the first controller 111 transmits the data to be shared with the second display apparatus 200 to the second display apparatus 200 while communicating with the second display apparatus 200 through the first communication unit 101.

Here, the first controller 111 controls the first communication unit 101 to transmit a command on whether to share data with the second display apparatus 200 in packets. If a response to share the data is received from the second display apparatus 200, the first controller 111 processes the data and loads the data in the first memory 107. Then, the first controller 111 transmits the data and a reference address of the first memory 107 where the data is loaded to the second display apparatus 200.

Further, the first controller 111 may include an open program (e.g., MS Office, MS Office Viewer, Acrobat, Hangul, Hunminjungum, etc.) executed corresponding to a format of data and a synchronization program which displays the same content as data opened via the open program.

The first controller 111 loads data in a certain region of the first memory 107 via the open program and inputs the reference address of the first memory 107 where the data is loaded to the synchronization program to display the same content as the data opened by the open programs through the synchronization program. Then, the first controller 111 transmits the reference address and the data to the second display apparatus 200.

Here, the synchronization program may execute in a dialog box, and the first controller 111 controls to display the data in a region where a content of the synchronization program is displayed.

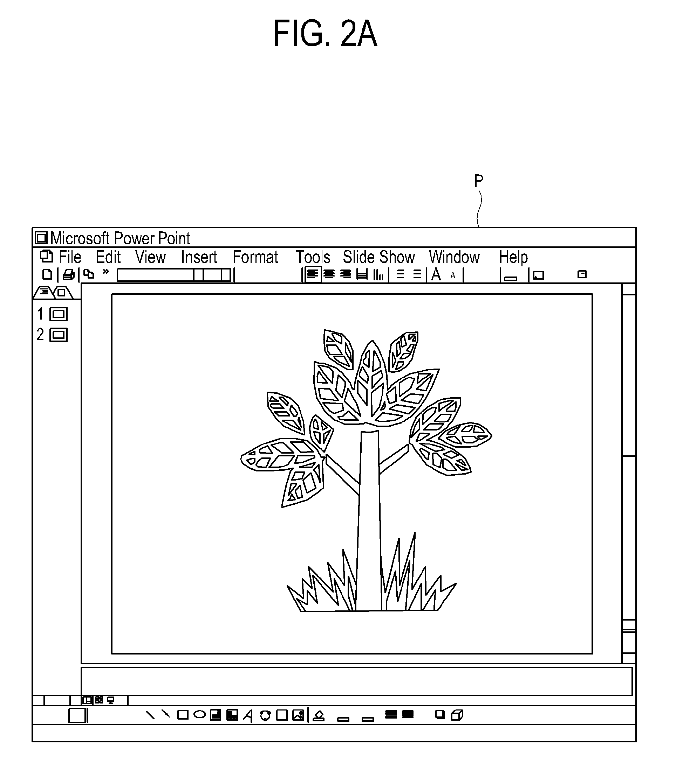

For example, assuming that data named "test.ppt" is shared with the second display apparatus 200, as shown in FIG. 2A, it means that the data is generated by Microsoft Power Point of MS Office, and thus, the data is processed by Microsoft Power Point.

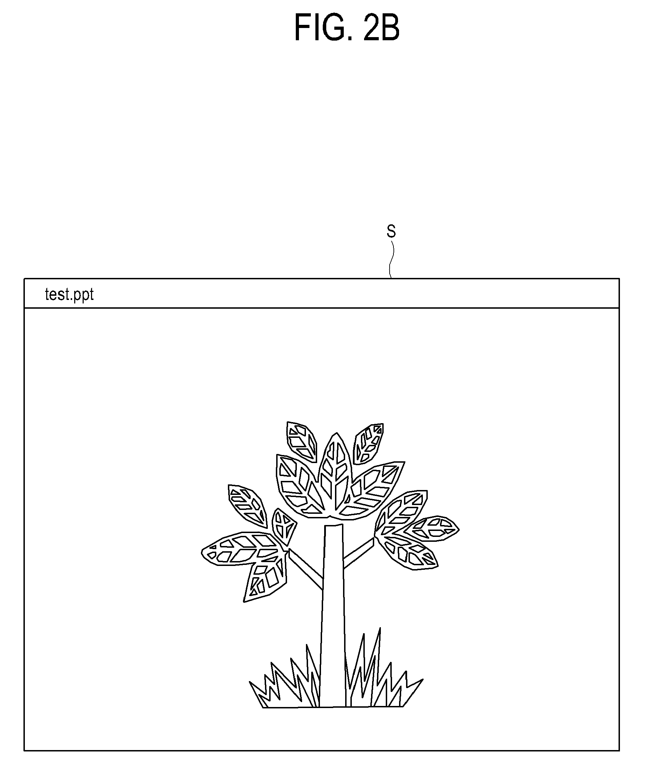

If the synchronization program (S) reads out the reference address of the data which is executed by the Power Point (P) and executes the data, as shown in FIG. 2B, the data is displayed by the synchronization program (S) like the content displayed by the open program (P). Here, the first controller 111 may control not to display the data executed by the open program on the first display unit 105 but to display the content of the data by the synchronization program on the first display unit 105.

Thus, the first controller 111 transmits the data executed by the synchronization program (S) using the reference address of the data and the reference address of the data to the second display apparatus 200 via the first communication unit 101.

If the data is changed with regard to page, content, etc. via the first user selection unit 109, the first controller 111 changes the data executed by the synchronization program on the basis of the change. Then, the first controller 111 controls the first communication unit 101 to transmit address information on a reference address where the data is loaded and data change information on changes of the data to the second display apparatus 200.

Referring to FIG. 1, the second display apparatus 200 according to the present exemplary embodiment includes a second communication unit 201, a second signal processing unit 203, a second display unit 205, a second user interface (UI) generating unit 207, the second user selection unit 209, the second memory 211, and a second controller 213. Here, similar elements to those in the first display apparatus 100 will be described in brief.

The second communication unit 201 corresponds to the first communication unit 101 of the first display apparatus 100 and communicates with the first communications unit 101, interchanging packets through SIP.

The second signal processing unit 203 processes data input through the second communication unit 201 by control of the second controller 213 and provides the data to the second display unit 205 to be displayed. Further, the second signal processing unit 205 provides a content of the data executed by the second controller 213 to the second display unit 205 to be displayed.

The second UI generating unit 207 generates a UI window to display a command if the command in a packet on whether to share data via the second communication unit 201 is received from the first display apparatus 100. The second UI generating unit 207 may perform in an On Screen Display (OSD) or the like.

The second user selection unit 209 is provided to select whether to share data with the first display apparatus 100 and to change the executed data. The second user selection unit 209 may include a remote controller, menu keys provided on a casing, a mouse, a keyboard, etc.

The second memory 211 is a region where data is loaded by the second controller 213 and may be provided as a random access memory (RAM) or the like. Here, the data may be loaded in a reference address of the second memory 211 like the reference address of the first memory 107 where the data is loaded in the first display apparatus 100 by the second controller 213.

The second controller 213 is provided to execute the data transmitted from the first display apparatus 100 and to change the data when the data change information on the changes of the data is received from the first display apparatus 100. The second controller 213 may be provided as a CPU, a microcomputer, etc.

In detail, if the command on whether to share the data is received from the first display apparatus 100 via the second communication unit 201, the second controller 213 controls the second UI generating unit 207 to generate a UI window for displaying the command.

Then, if it determined whether the data is to be shared through the second user selection unit 209, the second controller 213 controls the second communication unit 201 to transmit whether to share the data to the first display apparatus 100.

If the data is transmitted from the first display apparatus 100, the second controller 213 loads the data to the reference address of the second memory 211 which is the same as that of the first memory 107.

Here, the second controller 213 receives the data and the reference address of the first memory 107 where the data is loaded from the first display apparatus 100 or presets a reference address, where the second display apparatus 200 loads the data, to be the same as the reference address of the first display apparatus 100. Then, the second controller 213 loads the transmitted data to the preset reference address which is the same as that of the first memory 107.

The second controller 213 includes an open program and a synchronization program like the first controller 211 and executes the data using the open program. Further, the second controller 213 inputs the reference address of the data loaded in the second memory 211 to the synchronization program and controls to display the same content as the data opened by the data open program by the synchronization program.

If address information on the reference address of the first memory 107 where the data is loaded and data change information on changes of data via the second communication unit 201 is received from the first display apparatus 100, the second controller 213 changes the data loaded in the reference address corresponding to the received address information on the basis of the data change information and to display the data.

For example, in the case that a user changes the page of the data in the first display apparatus 100, data change information on the change in the page in the first display apparatus 100 is transmitted along with the address information in a packet. The second controller 213 changes the data loaded in the reference address of the second memory 211, which is the same as the transmitted address information, on the basis of the data change information, thereby synchronizing the data executed in the first display apparatus 100 and the second display apparatus 200.

Accordingly, data may be shared and synchronized among a plurality of users without a server, and thus, an additional process to synchronize the data is not necessary.

Moreover, as a simple program, such as a dialog box, opens and controls data which is executed by the data open program, a user may add a desired function to the dialog box.

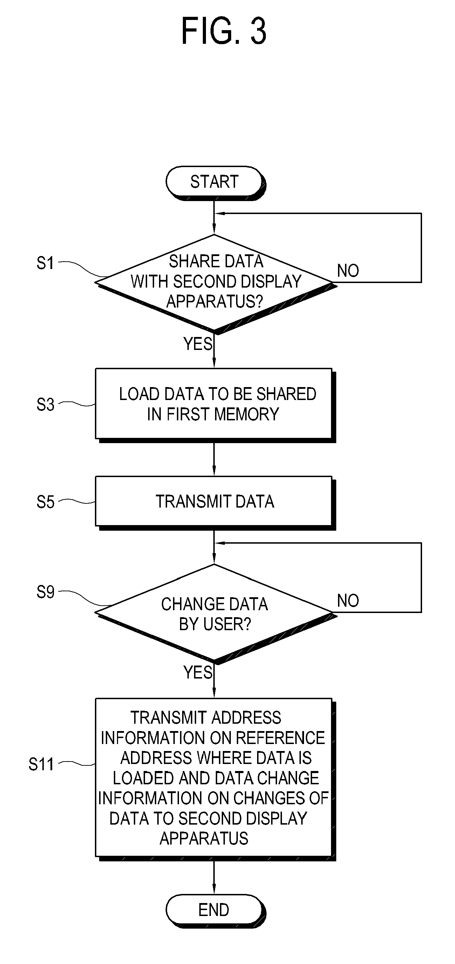

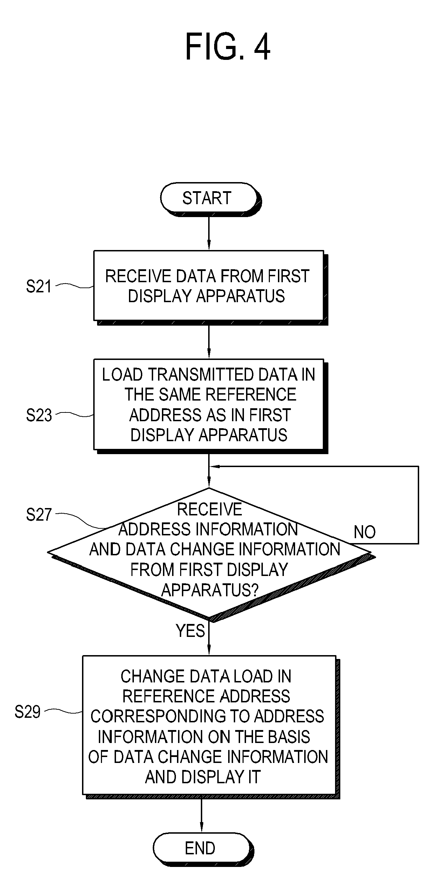

Hereinafter, a control method of the display apparatus according to the exemplary embodiment of the present invention will be described with reference to FIGs. 3 and 4, in which FIG. 3 is a flow chart illustrating a control process of the first display apparatus 100; and FIG. 4 is a flow chart illustrating a control process of the second display apparatus 200.

Referring to FIG. 3, the first controller 111 determines whether to share data with the second display apparatus 200 (S1). As described above, the first controller 111 transmits a command in a packet to inquire whether to share data to the second display apparatus 200 and determines whether to share data on the basis of a response from the second display apparatus 200.

If data is to be shared with the second display apparatus 200, the first controller 111 loads data to be shared to the first memory 107 (S3), and transmits the data to the second display apparatus 200 (S5).

If the data is changed by the user (S9), address information on a reference address where the data is loaded and data change information on changes of data are transmitted to the second display apparatus (S11).

Referring to FIG. 4, the second display apparatus 200 receives the data to be shared from the first display apparatus 100 (S21).

The second display apparatus 200 loads the data to a reference address of the second memory 211 which is the same as that of the first memory 107 (S23). As described above, the second controller 213 receives the data and the reference address where the data is loaded, or loads the data to a reference address which is preset to load data along with the first display apparatus 100 to load the data in the same reference address as the first memory 107.

The second controller 213 determines whether the address information and the data change information are transmitted from the first display apparatus 100 via the second communication unit 201 (S27).

If the address information and the data change information are received from the first display apparatus 100, the second controller 213 changes the data loaded in the reference address corresponding to the address information on the basis of the data change information and controls to display the changed data (S29).

Accordingly, data may be shared and synchronized among a plurality of users without a server, and thus an additional process to synchronize the data is not necessary.

In addition, as a simple program, such as a dialog box, opens and controls data which is executed by the data open program, a user may add a desired function to the dialog box.

In the exemplary embodiment, the first display apparatus 100 controls the data opened in the second display apparatus 200 for synchronization. However, the second display apparatus 200 may control the first display apparatus 100, or the first and second display apparatuses 100 and 200 may control each other simultaneously.

As described above, the exemplary embodiments of the present invention provides a display apparatus where data can be shared and synchronized among a plurality of users without a server, a control method thereof, and a display system having the same.

Also, the exemplary embodiments of the present invention provides a display apparatus where data can be synchronized simply without an additional process, a control method thereof, and a display system having the same.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A display apparatus comprising:
a communication unit;
a memory in which data which is the same as data of an external display apparatus is loaded in a reference address which is the same as a reference address of the external display apparatus; and
a controller which changes data loaded in a reference address corresponding to address information from the external display apparatus based on data change information from the external display apparatus and displays the changed data if the address information and the data change information are received from the external display apparatus via the communication unit.

2. The display apparatus according to claim 1, wherein if the data and the reference address are received from the external display apparatus, the controller loads the data to the memory based on the received reference address.

3. The display apparatus according to claim 1, wherein if the data is received from the external display apparatus, the controller loads the received data to a preset reference address in the memory.

4. The display apparatus according to claim 1, wherein the communication unit communicates with the external display apparatus using Session Initiation Protocol.

5. A control method of a display apparatus comprising:
communicating with an external display apparatus;
loading data which is the same as data of the external display apparatus to a reference address which is the same as a reference address of the external display apparatus; and
if address information and data change information are received from the external display apparatus, changing data loaded in a reference address corresponding to the received address information based on the data change information and displaying the changed data.

6. The control method according to claim 5, wherein the loading the data comprises loading the data based on the received reference address if the data and the reference address are received from the external display apparatus.

7. The control method according to claim 5, wherein the loading the data comprises loading the received data to a preset reference address if the data are received from the external display apparatus.

8. The control method according to claim 5, wherein the communicating with the external display apparatus is performed using Session Initiation Protocol.

9. A display system comprising:
a first display apparatus which comprises a first communication unit, a first memory in which data is loaded, and a first controller which controls the first communication unit to transmit address information on a reference address of the first memory and data change information on a change of the data if the data is changed; and
a second display apparatus which comprises a second communication unit, a second memory in which data which is the same as the data of the first display apparatus is loaded in a reference address which is the same as the reference address of the first memory, and a second controller which changes data loaded to the reference address of the first memory corresponding to the address information based on the data change information and displays the changed data if the address information and the data change information are received from the first display apparatus via the second communication unit.
